# EUROPEAN PATENT SPECIFICATION

(11) **EP 3 399 651 B1**
(45) Date of publication and mention of the grant of the patent: **06.10.2021**
(21) Application number: 16880949.9
(22) Date of filing: 14.12.2016
(51) Int. Cl.: H04B 1/40

(54) **DUPLEX FILTER DEVICE, RRU SYSTEM AND RADIO FREQUENCY SYSTEM**
DUPLEXFILTERVORRICHTUNG, RRU-SYSTEM UND FUNKFREQUENZSYSTEM
DISPOSITIF DE FILTRE DOUBLE, SYSTÈME DE RRU ET SYSTÈME RADIOFRÉQUENCE

(30) Priority: 30.12.2015 CN 201511026973
(43) Date of publication of application: 07.11.2018
(73) Proprietor: ZTE Corporation, Shenzhen, Guangdong 518057 (CN)
(72) Inventor: KANG, Yulong, Shenzhen Guangdong 518057 (CN)
(74) Representative: WBH Wachenhausen Patentanwälte PartG mbB
(86) International application number: PCT/CN2016/109945
(87) International publication number: WO 2017/114159

(56) References cited:
- EP-A1- 2 911 305
- WO-A1-2013/097395
- CN-A- 101 771 447
- CN-A- 102 570 064
- CN-A- 103 747 447
- CN-U- 203 607 549

## Description

### TECHNICAL FIELD 1

The present invention relates to the field of radio frequency (RF), and particularly to a duplex filtering device, a Radio Remote Unit (RRU) system, and an RF system.

### BACKGROUND

In the related technology, a duplex filter radio frequency (RF) device includes a master transmitting-receiving duplexer composed of a transmitting filter and a receiving filter and a diversity receiving filter composed of a separately filter. Generally, each of the transmitting filter and the receiving filter in the duplexer is composed of metal coaxial cavities. In order to satisfy performance required by a base station, such as, transmitting-receiving suppression, insertion loss and the like, each of the transmitting filter and the receiving filter in a commonly used duplex filter RF device is composed of multiple metal resonant cavities.

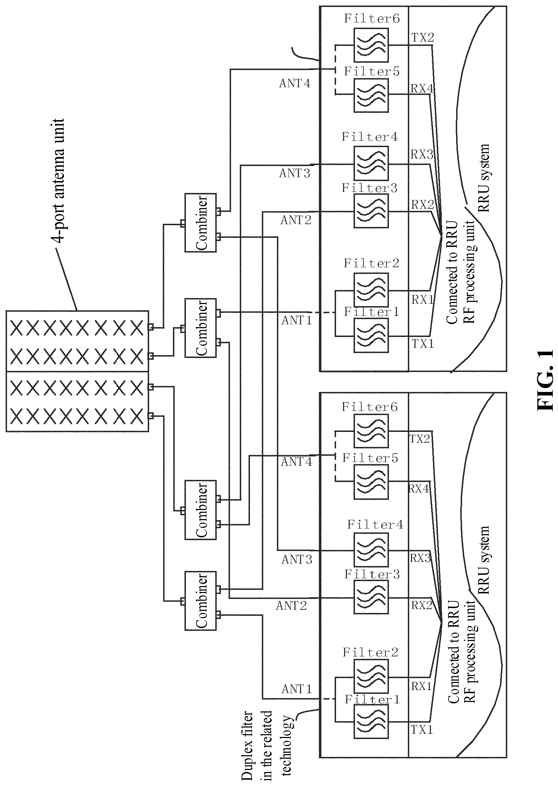

FIG.1 is a schematic diagram of a duplex filter and a system networking architecture related to the duplex filter in the related technology. As illustrated in FIG.1, the system networking architecture includes two radio remote units (RRUs), four inter-frequency combiners, a 4-port antenna, and multiple radio frequency cables. Herein, the RRU is composed of four modules: an intermediate frequency module, a transceiver module, a power amplifier module and a filtering module. The digital intermediate frequency module is configured to perform modulation/demodulation, digital up/down conversion and analogue to digital (A/D) conversion for optical transmission. The transceiver module is configured to transform an intermediate frequency signal to a radio frequency signal. The radio frequency signal is transmitted through a port of the antenna via the power amplifier module and the filtering module. In downlink, the RRU performs frequency conversion, filtering and radio frequency filtering on based band signals, and amplifies the filtered radio frequency signals by means of a linear power amplifier and transmits the amplified signals via the antenna. In uplink, the uplink signals received from mobile terminals are processed by the RRU, including filtering, low noise amplification, radio small-signal amplification filtering, down conversion, analog to digital conversion and digital intermediate frequency processing etc. The system networking architecture is complex and has a large number of cables, the number of the engineering components are increased, the reliability is low while the cost is high, which is unfavorable for operators to expand and upgrade the network.

At present, operators are increasingly demanding compact and versatile base stations. Thus, how to add functionality of a base station, to reduce the complexity of a network and the number of antennae and cables required during the networking and the cost of building stations, is an important challenge for operators. There is no effective solution to the above problems in the related technology.

EP 2911305A1 discloses a multiplexer which solves the problem of how multi-mode signals share a transmitting channel, a receiving channel and a transceiving antenna by the above technical scheme.

WO 2013/097395 A1 discloses an active antenna device which comprises digital processing modules, transmission and reception radio-frequency modules and an antenna array in sequence.

### SUMMARY

The embodiments of the present invention provide a duplex filtering device, a RRU system, and an RF system, so as to at least solve the problems in the related technology that the diplex filter and the system networking architecture related to the duplex filter are complex and the number of cables is excessive.

The features of the duplex filtering device, Radio Remote Unit system and radio frequency system according to the present invention are defined in the independent claims, and the preferable features according to the present invention are defined in the dependent claims.

According to the embodiments of the present invention, each of one end of the transmitting-receiving combiner and one end of a first group of filters composed of at least one receiving filter and at least one transmitting filter is connected to the first common interface ANT; each of another end of the transmitting-receiving combiner and one end of a second group of filters composed of at least one receiving filter and at least one transmitting filter is connected to the second common interface ANT, where each of the first common interface ANT and the second common interface ANT is connected to a respective external interface unit; the receiving filter in each of the first group of filters and the second group of filters is connected to a radio remote unit, RRU, through a respective input port RX; and the transmitting filter in each of the first group of filters and the second group of filters is connected to the RRU through a respective output port TX. According to the embodiments of the present invention, the problems in the related technology that the diplex filter and the system networking architecture related to the duplex filter are complex and the number of cables is excessive are solved.

### BRIEF DESCRIPTION OF DRAWINGS

The drawings described herein are intended to provide a further understanding of the present invention, and constitute a part of the present application. The exemplary embodiments of the present invention and descriptions thereof are used to explain the present invention, and do not mean to improperly limit the present invention. In the drawings:
FIG. 1 is a schematic diagram of a duplex filter and a system networking architecture related to the duplex filter in the related technology.
FIG. 2 is a structural block diagram of a duplex filtering device according to an embodiment of the present invention.
FIG. 3 is a structural block diagram of a RRU system according to an alternative embodiment of the present invention.
FIG. 4 is a structural block diagram of an antenna radio frequency system according to an embodiment of the present invention.
FIG. 5 is a structural block diagram of a duplex filter according to an alternative embodiment of the present invention.
FIG. 6 is a schematic diagram of a system networking architecture of the duplex filter according to an alternative embodiment of the present invention.
FIG. 7 is a block diagram of a system network architecture of a 4-port antenna unit according to an alternative embodiment of the present invention.
FIG. 8 is a block diagram of a system network architecture of a 2-port antenna unit according to an alternative embodiment of the present invention.
FIG. 9 is a block diagram of a system network architecture of an n-port antenna unit according to an alternative embodiment of the present invention.
FIG. 10 is a block diagram of a specific embodiment of a duplex filter according to an alternative embodiment of the present invention.
FIG. 11 is a structural block diagram of a 2*4T4R networking architecture implemented by duplex filters according to an alternative embodiment of the present invention.

### DETAILED DESCRIPTION

Hereinafter, the present invention will be described in detail with reference to the accompanying drawings and in conjunction with the embodiments. It should be noted that the embodiments and the features in the embodiments in the present application can be combined with each other without conflict.

It should be noted that the terms "first", "second", and the like in the description, claims and the foregoing drawings of the present invention are used to distinguish similar objects and do not necessarily describe a specific sequence or order.

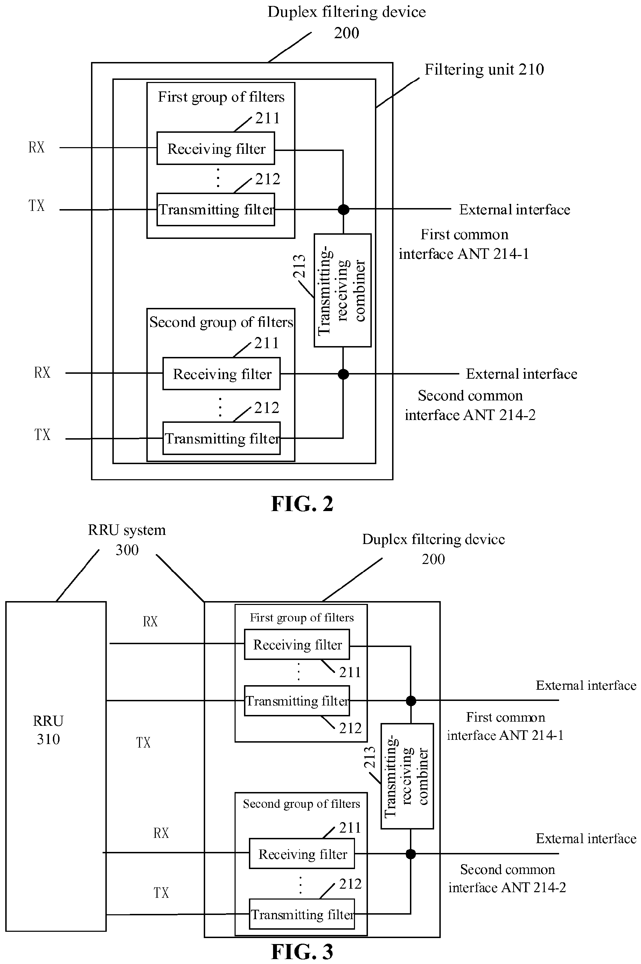

In an embodiment, a duplex filtering device is provided. FIG. 2 is a structural block diagram of a duplex filtering device according to an embodiment of the present invention. As illustrated in FIG.2, the duplex filtering device 200 includes at least one filtering unit 210. Here, the filtering unit includes: a receiving filter 211, a transmitting filter 212, a transmitting-receiving combiner 213, and a common interface ANT 214. The common interface ANT 214 includes a first common interface ANT 214-1 and a second common interface ANT 214-2.

Each of one end of the transmitting-receiving combiner 213 and one end of a first group of filters composed of at least one receiving filter 211 and at least one transmitting filter 212 is connected to the first common interface ANT 214-1.

Each of another end of the transmitting-receiving combiner 213 and one end of a second group of filters composed of at least one receiving filter 211 and at least one transmitting filter 212 is connected to the second common interface ANT 214-2. Herein, each of the first common interface ANT 214-1 and the second common interface ANT 214-2 is connected to a respective external interface unit.

The receiving filter 211 in each of the first group of filters and the second group of filters is connected to a RRU through a respective input port RX.

The transmitting filter 212 in each of the first group of filters and the second group of filters is connected to the RRU through a respective output port TX.

In an embodiment, the first group of filters may include a first receiving filter and a first transmitting filter, and the second group of filters may include a second receiving filter and a second transmitting filter.

Herein, an ANT common end of each of the first transmitting filter, the transmitting-receiving combiner, and the first receiving filter is connected to the first common interface ANT. The first receiving filter is connected to the RRU through an input port RX and the first transmitting filter is connected to the RRU through an output port TX. Each of another ANT common end of the transmitting-receiving combiner, an ANT common end of the second receiving filter and an ANT common end of the second transmitting filter is connected to the second common interface ANT. The second receiving filter is connected to the RRU through an input port RX and the second transmitting filter is connected to the RRU through an output port TX.

In an embodiment, a passing frequency band of each of the first receiving filter and the second receiving filter may be a first frequency band. A passing frequency band of each of the first transmitting filter and the second transmitting filter may be a second frequency band. The first frequency band and the second frequency band may be different from each other. The passing frequency band of the transmitting-receiving combiner may be a third frequency band, which may be different from the first frequency band and the second frequency band.

In a specific application scenario, each of the first frequency band and the second frequency band may be 1800 frequency band and the third frequency band may be 2100 frequency band; or each of the first frequency band and the second frequency band may be 2100 frequency band and the third frequency band may be 1800 frequency band. It should be noted that values of the frequency bands in the above embodiments are merely examples and do not mean to limit the present invention. In other application scenarios of the present invention, the values of the frequency bands may be determined according to actual conditions.

FIG. 3 is a structural block diagram of a RRU system according to an alternative embodiment of the present invention. As illustrated in FIG.3, the RRU system 300 includes an RRU 310 and the duplex filtering device 200 as illustrated in FIG.2. Herein, the duplex filtering device 200 is connected to the RRU 310 through input ports RXs and output ports TXs and to external interfaces through the common interfaces ANT 214.

It should be noted that, in FIG. 3, only one filtering unit is taken as an example to describe a connection relationship between the duplex filtering device 200 and the RRU 310. When the duplex filtering device includes N filtering units, the duplex filtering device is connected to the RRU through the input ports RX of the receiving filters and the output ports TX of the transmitting filters in each of the filtering units and to external interfaces through the common interfaces ANT 214.

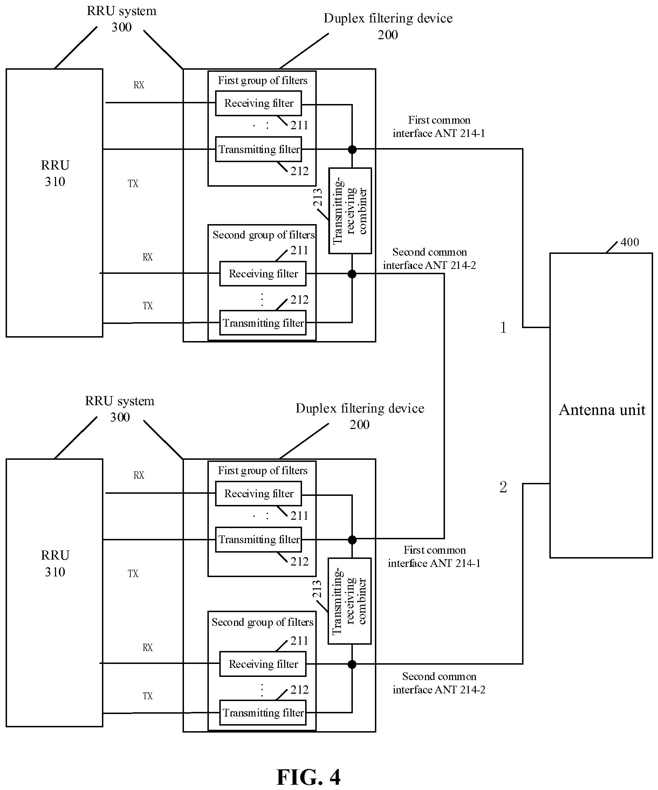

FIG. 4 is a structural block diagram of an antenna radio frequency system according to an embodiment of the present invention. As illustrated in FIG.4, the antenna radio frequency system includes an antenna unit 400 and at least two RRU systems 300 as illustrated in FIG.3, a common interfaces ANT 214 of each of the RRU systems 300 is connected to a respective port of the antenna unit by means of RF cable connection. It should be noted that Fig. 4 is an example in which only one filtering unit in the filtering device is illustrated.

In an embodiment, when the RRU system includes a first RRU system and a second RRU system. The antenna unit has N ports and the number of the common interfaces ANTs 214 is 2N. A first antenna port in the N-port antenna unit is connected to a first common interface ANT in the first RRU system by means of RF cable connection. A second common interface ANT in the first RRU system is connected to a (2N-1)^{th} common interface ANT in the second RRU system by means of RF cable connection. A (2N-1)^{th} common interface ANT in the first RRU system is connected to a second common interface ANT in the second RRU system by means of RF cable connection. A (2N)^{th} common interface ANT in the first RRU system is connected to a second antenna port in the N-port antenna unit by means of RF cable connection. A first common interface ANT in the second RRU system is connected to a (2N-1)^{th} antenna port in the N-port antenna unit by means of RF cable connection. A (2N)^{th} common interface ANT in the second RRU system is connected to a (2N)^{th} antenna port in the N-port antenna unit by means of RF cable connection. N is a natural number greater than or equal to 2.

In an embodiment, the RRU system 300 may include an RRU 310 and the duplex filtering device 200 as illustrated in FIG.2.

Herein, when the duplex filtering device includes one filtering unit, the RRU is connected to the input port RX of the first receiving filter, the input port RX of the second receiving filter, the output port TX of the first transmitting filter and the output port TX of the second transmit filter in the duplex filtering device. Alternatively, when the duplex filtering device includes multiple filtering units, the RRU is connected to the input port RX of the first receiving filter, the input port RX of the second receiving filter, the output port TX of the first transmitting filter and the output port TX of the second transmit filter in each of the duplex filtering devices.

It should be noted that the passing frequency bands of the filters in the embodiment as illustrated in FIG.4 are consistent with the passing frequency bands of the filters in the embodiment as illustrated in FIG.2, and therefore they will not be described herein again.

As can be seen, in the embodiments, when the duplex filtering device, the RRU and the antenna are used for networking, the number of antenna feeders and radio frequency cables used in the wireless network can be reduced, so that the engineering installation is simplified and the maintenance costs are reduced.

The invention will be exemplarily described below in conjunction with alternative embodiments of the present invention.

In an alternative embodiment of the present invention, a duplex filter and a networking architecture based on the duplex filter are provided. The duplex filter includes multiple receiving filters, multiple transmitting filters, multiple common antenna ANT ports, multiple output ports TXs and multiple input ports RXs and so on.

As the same time, the embodiment further provides multiple networking architectures based on the duplex filter.

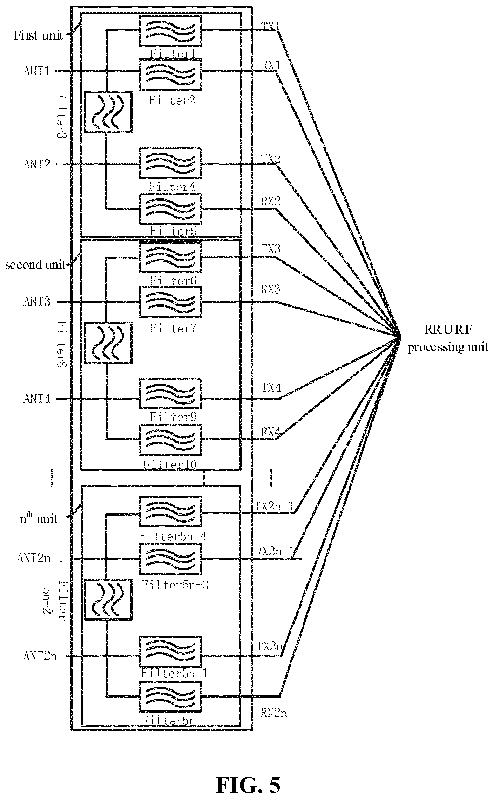

FIG. 5 is a structural block diagram of a duplex filter according to an alternative embodiment of the present invention. As illustrated in FIG.5, the duplex filter in the alternative embodiment may include multiple filtering units, where a connection relationship in a first unit is as follows.

Each of one end of Filter 1, one end of Filter 2, one end of Filter 3 is connected to a common interface ANT 1. Each of another end TX1 of the Filter 1 and another end RX1 of the Filter 2 is connected to an RRU RF processing unit. Another end of the Filter 3 is connected to a common interface ANT 2. Here, Filter 1, Filter 2, and Filter 3 are filters with different passing frequency bands.

Each of another end of Filter 3, one end of Filter 4, and one end of Filter 5 is connected to the common interface ANT 2. The one end of Filter 3 is connected to the common interface ANT 1. Each of another end TX2 of the Filter 4 and another end RX2 of Filter 5 is connected to the RRU RF processing unit. Here, Filter 3, Filter 4, and Filter 5 are filters with different passing frequency bands.

It should be noted that the foregoing Filter 1 and Filter 4 correspond to the first transmitting filter and the second transmitting filter respectively in the foregoing embodiments. Filter 2 and Filter 5 correspond to the first receiving filter and the second receiving filter respectively in the foregoing embodiments. Filter 3 corresponds to the transmitting-receiving combiner in the foregoing embodiments.

A connection relationship in a second unit in the duplex filter is as follows.

Each of one end of Filter 6, one end of Filter 7, and one end of Filter 8 is connected to a common interface ANT 3. Each of another end TX3 of the Filter 6 and another end RX3 of the Filter 7 is connected to the RRU RF processing unit. Another end of the Filter 8 is connected to a common interface ANT 4. Here, Filter 6, Filter 7, and Filter 8 are filters with different passing frequency bands.

Each of another end of Filter 8, one end of Filter 9, and one end of Filter 10 is connected to the common interface ANT 4. The one end of Filter 8 is connected to the common interface ANT 3. Each of another end of the Filter 9 (TX4) and another end of Filter 10 (RX4) is connected to the RRU RF processing unit. Here, Filter 3, Filter 4, and Filter 5 are filters with different passing frequency bands;

It should be noted that the foregoing Filter 6 and Filter 9 correspond to the first transmitting filter and the second transmitting filter respectively in the foregoing embodiments, and Filter 7 and Filter 10 correspond to the first receiving filter and the second receiving filter respectively in the foregoing embodiments, Filter 8 corresponds to the transmitting-receiving combiner in the foregoing embodiments.

In addition, when the duplex filter in the alternative embodiment is expanded to n units, a connection relationship in the n^{th} unit may be as follows.

Each of one end of Filter 5n-4, one end of Filter 5n-3 and one end of Filter 5n-2 is connected to the common interface ANT 2n-1. Each of another end of the Filter 5n-4 (TX 2n-1) and another end of the Filter 5n-3 (RX 2n-1) is connected to the RRU RF processing unit. Another end of the Filter 5n-2 is connected to the common interface ANT 2n. Here, Filter 5n-4, Filter 5n-3 and Filter 5n-2 are filters with different passing frequency bands.

Each of another end of Filter 5n-2, one end of Filter 5n-1, and one end of Filter 5n is connected to the common interface ANT 2n. Each of another end of the Filter 5n-1 (TX 2n) and another end of Filter 5n (RX 2n) is connected to the RRU RF processing unit. Here, Filter 5n-2, Filter 5n-1, and Filter 5n are filters with different passing frequency bands.

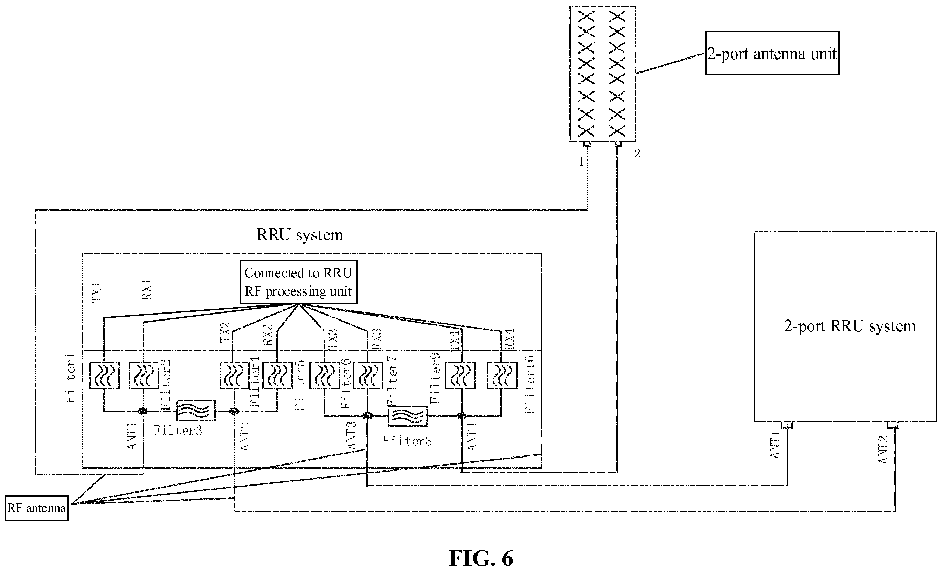

FIG. 6 is a schematic diagram of a system networking architecture of the duplex filter according to an alternative embodiment of the present invention. As illustrated in FIG. 6, the connection relationship in a networking architecture of a 2-port antenna unit is as follows. Port 1 of the 2-port antenna unit is connected to a common interface ANT 1 of the duplex filter by means of RF cable connection. Port 2 of the 2-port antenna unit is connected to ANT 4 of the duplex filter by means of RF cable connection. In addition, a common interface ANT 2 of the duplex filter is connected to ANT 2 in a second RRU by means of RF cable connection. A common interface ANT 3 of the duplex filter is connected to the common interface ANT 1 in the second RRU by means of RF cable connection. Therefore, a combined cabinet network composed of a 2-port antenna feeder is formed.

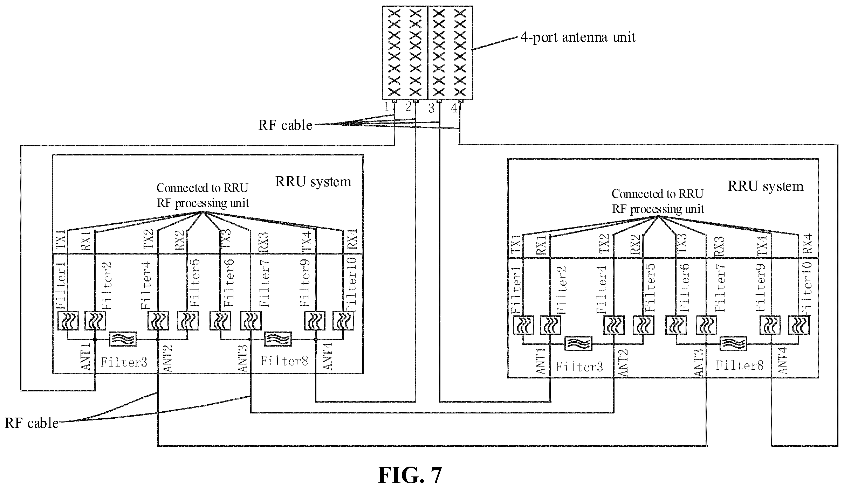

FIG. 7 is a block diagram of a system network architecture of a 4-port antenna unit according to an alternative embodiment of the present invention. As illustrated in FIG. 7, the connection relationship in a networking architecture of a 4-port antenna unit is as follows. An antenna port 1 of the 4-port antenna unit is connected to a common interface ANT 1 of the duplex filter in a first RRU system by means of RF cable connection. A common interface ANT 2 of the duplex filter in the first RRU system is connected to a common interface ANT 3 of the duplex filter in a second RRU system by means of RF cable connection. Similarly, the common interface ANT 3 of the duplex filter in the first RRU system is connected to the common interface ANT 2 of the duplex filter in the second RRU system by means of RF cable connection. Further, a common interface ANT 4 of the duplex filter in the first RRU system is connected to an antenna port 2 by means of RF cable connection. The common interface ANT 1 of the duplex filter in the second RRU system is connected to an antenna port 3 by means of RF cable connection. The common interface ANT 4 of the duplex filter in the second RRU system is connected to an antenna port 4 by means of RF cable connection.

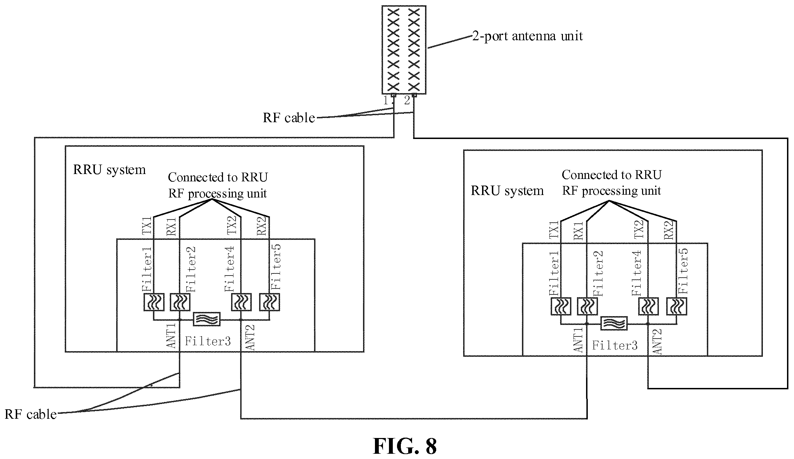

It should be noted that two duplex filtering units are taken as an example above. In this alternative embodiment, the duplex filter may include one filtering unit. FIG. 8 is a block diagram of a system network architecture of a 2-port antenna unit according to an alternative embodiment of the present invention. As illustrated in FIG.8, a first common interface ANT 1 in a first RRU system is connected to a first port of the 2-port antenna unit, a second common interface ANT 2 in the first RRU system is connected to a first common interface ANT 1 of a second RRU system, and a second common interface ANT 2 of the second RRU system is connected to a second port of the 2-port antenna unit.

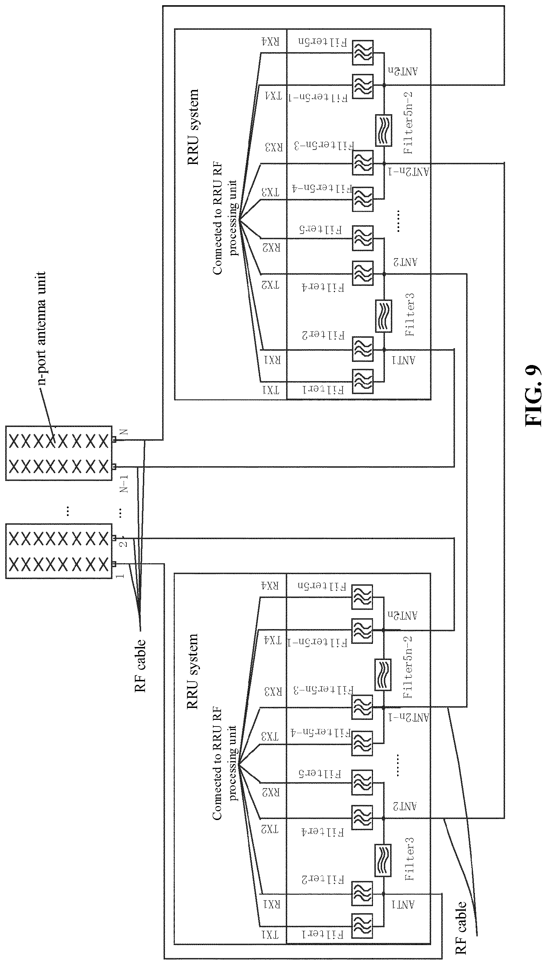

FIG. 9 is a block diagram of a system network architecture of an n-port antenna unit according to an alternative embodiment of the present invention. As illustrated in FIG. 9, a connection relationship in a networking architecture of a n-port antenna unit is as follows. A first antenna port (port 1) in the n-port antenna unit is connected to a first common interface ANT 1 of the duplex filter in a first RRU system by means of RF cable connection. A second common interface ANT 2 of the duplex filter in the first RRU system is connected to a (2n-1)^{th} common interface ANT 2n-1 of the duplex filter in the second RRU system by means of RF cable connection. Similarly, a (2n-1)^{th} common interface ANT 2n-1 of the duplex filter in the first RRU system is connected to a second common interface ANT 2 of the duplex filter in the second RRU system by means of RF cable connection. A (2n)^{th} common interface ANT 2n in the first RRU system is connected to a second antenna port in the N-port antenna unit by means of RF cable connection. A first common interface ANT 1 in the second RRU system is connected to a (n-1)^{th} antenna port in the N-port antenna unit by means of RF cable connection. A (2n)^{th} common interface ANT 2n in the second RRU system is connected to an n^{th} antenna port in the N-port antenna unit by means of RF cable connection. Therefore, a combined cabinet network composed of the n-port antenna is formed.

According to the network architecture as illustrated in FIG.9, a process of receiving signals by the duplex filter in the alternative embodiment may be as follows. Spatial wireless signals received at the first antenna port of the n-port antenna unit are transmitted to the first common interface ANT 1 of the duplex filter in the first RRU system by means of RF cable connection. One of the signals received at the first common interface ANT 1 is filtered by Filter 2 (a receiving filter) and transmitted to the first RRU RF processing unit through input port RX1. Another signal of the signals received at the first common interface ANT 1 is filtered by Filter 3 (a transmitting-receiving combiner) and transmitted to the (2n-1)^{th} common interface ANT 2n-1 in the second RRU system by means of RF cable connection and filtered by Filter 5n-3 and finally transmitted to the second RRU RF processing unit through the input port RX 2n-1.

Wireless signals received at the second antenna port are transmitted to the (2n)^{th} common interface ANT 2n of the duplex filter in the first RRU system. One of the signals received at the (2n)^{th} common interface ANT 2n of the duplex filter in the first RRU system is filtered by Filter 5n-2 and transmitted to the first RRU RF processing unit through input port RX 2n. Another signal of the signals received at the (2n)^{th} common interface ANT 2n of the duplex filter in the first RRU system is filtered by Filter 5n-2 and transmitted to the second common interface ANT 2 in the second RRU system by means of RF cable connection and filtered by Filter 5 and finally transmitted to the second RRU RF processing unit through the input port RX 2.

Signals received at output port TX1 from the first RRU RF processing unit are filtered by Filter 1 and transmitted to the first antenna port in the antenna unit by means of RF cable connection. signals received at output port TX2 from the first RRU RF processing unit are filtered by Filter 4 and transmitted to the (2n-1)^{th} common interface ANT 2n-1 in the second RRU system by means of RF cable connection and combined by Filter 5n-2 to the (2n)^{th} common interface ANT 2n in the second RRU system and finally transmitted to the antenna unit by means of RF cable connection.

Similarly, the n^{th} signal received at output port TX 2n-1 from the first RRU RF processing unit are filtered by Filter 5n-4 and transmitted to the second common interface ANT 2 in the second RRU system by means of RF cable connection and combined by Filter 3 in the second RRU system to the first common interface ANT 1 in the second RRU system and finally transmitted to the antenna unit by means of RF cable connection.

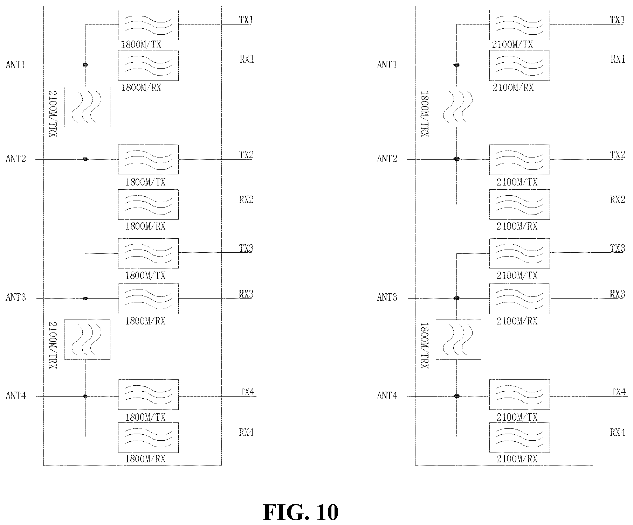

In an embodiment, duplex filters having different passing frequency bands, such as 1800 frequency band and 2100 frequency band, are provided. FIG. 10 is a block diagram of a specific embodiment of a duplex filter according to an alternative embodiment of the present invention. As illustrated in FIG.10, the 1800 duplex filter includes: four 1800 transmitting filters (TX) (having a passing frequency band of 1800 frequency band, four 1800 receiving filters (RX) (having a passing frequency band of 1800 frequency band), two 2100 wideband combiners (having a passing frequency band of 2100 frequency band) (TRX) and four antenna ports (ANT1-ANT4).

The connection relationship in the duplex filter having the passing frequency band of 1800 frequency band is as follows. The antenna port ANT 1 is connected to each of one end of a transmitting filter (TX1) having the passing frequency band of 1800 frequency band. One end of a receiving filter (RX1) having the passing frequency band of 1800 frequency band. One end of the wideband combiner (TRX) having the passing frequency band of 2100 frequency band. Each of another end of TX1 and another end of RX1 is connected to the RRU RF processing unit. Another end of the wideband combiner (TRX) having the passing frequency band of 2100 frequency band is connected to ANT 2. Herein, the transmitting filter (TX1) having the passing frequency band of 1800 frequency band, the receiving filter (RX1) having the passing frequency band of 1800 frequency band and the wideband combiner (TRX) having the passing frequency band of 2100 frequency band are three filters having different passing frequency bands. In addition, the antenna port ANT 2 is connected to each of one end of a transmitting filter (TX2) having the passing frequency band of 1800 frequency band, one end of a receiving filter (RX2) having the passing frequency band of 1800 frequency band. One end of the wideband combiner (TRX) having the passing frequency band of 2100 frequency band; the one end of the wideband combiner (TRX) having the passing frequency band of 2100 frequency band is connected to ANT 1. Each of another end of TX2 and another end of RX2 is connected to the RRU RF processing unit. Herein, the transmitting filter (TX2) having the passing frequency band of 1800 frequency band, the receiving filter (RX2) having the passing frequency band of 1800 frequency band and the wideband combiner (TRX) having the passing frequency band of 2100 frequency band are three filters having different passing frequency bands.

Similarly, the ANT 3, ANT 4, the transmitting filter having the passing frequency band of 1800 frequency band, the receiving filter having the passing frequency band of 1800 frequency band and the wideband combiner (TRX) having the passing frequency band of 2100 frequency band are interconnected in a same manner as the ANT 1 and ANT 2, and therefore they will not be repeatedly described.

It should be noted that the internal structure of the duplex filter having a passing frequency band of 2100 frequency band is as same as that of the duplex filter having a passing frequency band of 1800 frequency band, the difference between the two lies that the working frequency of the duplex filter having the passing frequency band of 2100 frequency band is different from that of the duplex filter having a passing frequency band of 1800 frequency band.

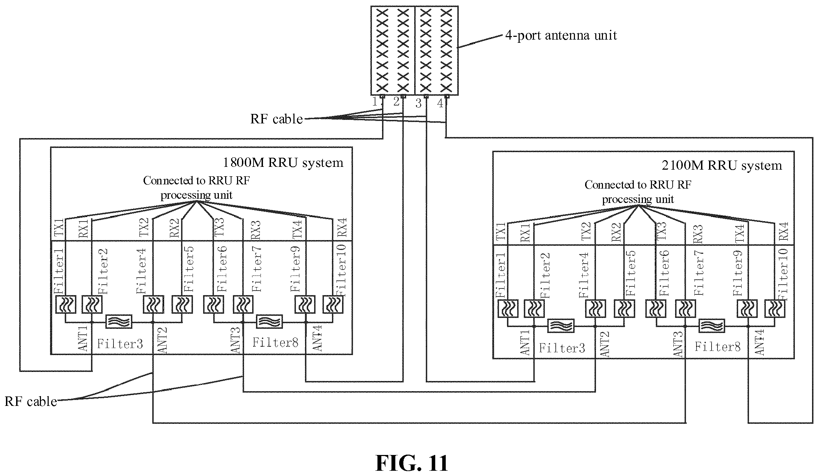

In an embodiment, a 2*4T4R networking architecture composed of a filter having the passing frequency band of 1800 frequency band and a filter having the passing frequency band of 2100 frequency band and supported by a 4-port antenna unit is provided. FIG. 11 is a structural block diagram of a 2*4T4R networking architecture implemented by duplex filters according to an alternative embodiment of the present invention. As illustrated in FIG. 11, the connection relationship in the 2*4T4R networking architecture is as follows. A first antenna port (port 1) of the 4-port antenna unit is connected to a common interface ANT 1 in an RRU system composed of the duplex filter having the passing frequency band of 1800 frequency band by means of radio frequency (RF) connection. A common interface ANT 2 in the RRU system composed of the duplex filter having the passing frequency band of 1800 frequency band is connected to a common interface ANT 3 in an RRU system composed of the duplex filter having the passing frequency band of 2100 frequency band by means of RF connection. Similarly, the common interface ANT 3 in the RRU system composed of the duplex filter having the passing frequency band of 1800 frequency band is connected to the common interface ANT 2 in the RRU system composed of the duplex filter having the passing frequency band of 2100 frequency band by means of RF connection. A common interface ANT 4 in the RRU system composed of the duplex filter having the passing frequency band of 1800 frequency band is connected to a second antenna port (port 2) of the 4-port antenna unit by means of RF connection. The common interface ANT 1 in the RRU system composed of the duplex filter having the passing frequency band of 2100 frequency band is connected to a third antenna port (port 3) of the 4-port antenna unit by means of RF connection. The common interface ANT 4 in the RRU system composed of the duplex filter having the passing frequency band of 2100 frequency band is connected to a fourth antenna port (port 4) of the 4-port antenna unit by means of RF connection, and therefore a 2*4T4R combined cabinet network composed of the 4-port antenna is formed.

According to the 2*4T4R networking architecture implemented by duplex filters as illustrated in FIG. 11, a process of receiving signals through the duplex filters in the 2*4T4R networking architecture in this alternative embodiment is as follows.

Spatial wireless signals received at the first antenna port (port 1) of the 4-port antenna unit are transmitted to the first common interface ANT 1 in the RRU system composed of the duplex filter having the passing frequency band of 1800 frequency band by means of RF cable connection. One of the signals is filtered by the receiving filter (RX1) having the passing frequency band of 1800 frequency band and transmitted to an RRU RF processing unit in 1800 frequency band. Another signal of the signals received by the first common interface ANT 1 in the RRU system composed of the duplex filter having the passing frequency band of 1800 frequency band is filtered by the RRU combiner (TRX) in the 1800 frequency band and transmitted to the common interface ANT 3 in the RRU system composed by the duplex filter having the passing frequency band of 2100 frequency band by means of RF cable connection, filtered by the receiving filter (RX3) in the 2100 frequency band RRU system, and finally transmitted to the RRU RF processing unit in 2100 frequency band.

Similarly, wireless signals received at the second antenna port (port 2) are transmitted to the fourth common interface ANT 4 in the RRU system in 1800 frequency band. One of the signals is filtered by the receiving filter (RX4) in 1800 frequency band and transmitted to the RRU RF processing unit in 1800 frequency band. Another signal of the signals is filtered by the combiner (2100 frequency band/ TRX) in the RRU system in 1800 frequency band and transmitted to the ANT 2 in the RRU system in 2100 frequency band by means of RF connection, filtered by Filter 5 and transmitted to the RRU RF processing unit in 2100 frequency band through the input port RX2.

It should be noted that the process of receiving signals on the third antenna port and the fourth antenna port is similar to that of the first antenna port and the second antenna port, and therefore they will not repeatedly described.

In addition, a process of transmitting signals by the duplex filters in the 2*4T4R networking architecture in this alternative embodiment is as follows.

Signals transmitted by the RRU RF processing unit in the 1800 frequency band are filtered by the transmitting filter (TX1) in the 1800 frequency band and transmitted through the common interface ANT 1 to the antenna unit by means of RF cable connection. Signals received at the output port TX2 from the RRU RF processing unit in the 1800 frequency band are filtered by the transmitting filter (Filter 4/TX2) in the 1800 frequency band and transmitted to the common interface ANT 3 in the RRU system in the 2100 frequency band by means of RF cable connection, and combined by the combiner (1800 frequency band/TRX) in the RRU system in the 2100 frequency band to the common interface ANT 4 in the RRU system in the 2100 frequency band and finally transmitted to the fourth antenna port of the antenna unit by means of RF cable connection. Signals received at the output port TX3 from the RRU RF processing unit in the 1800 frequency band are filtered by the transmitting filter (Filter 6/TX3) in the 1800 frequency band and transmitted to the common interface ANT 2 in the RRU system in the 2100 frequency band by means of RF cable connection, and combined by the combiner (1800 frequency band/TRX) in the RRU system in the 2100 frequency band to the common interface ANT 1 in the RRU system in the 2100 frequency band and finally transmitted to the antenna unit by means of RF cable connection. Signals received at the output port TX4 from the RRU RF processing unit in the 1800 frequency band are filtered by the transmitting filter (Filter 9/TX4) in the 1800 frequency band and transmitted to the second antenna port of the antenna unit by means of RF cable connection.

It should be noted that the process of transmitting signals through the TX1-TX4 in the RRU system in the 2100 frequency band is similar to that of the RRU system in the 1800 frequency band, and therefore they will not repeatedly described.

The above embodiments are only preferred embodiments of the present invention, and are not intended to limit the present invention, it will be apparent to those skilled in the art that various modifications and changes can be made to the present invention. Any modifications, improvements, etc. made within the scope of the present invention are intended to be included in the scope of the present invention.

### Industrial applicability

As described above, a duplex filtering device, an RRU system and an RF system provided by the embodiments of the present invention have the following beneficial effects. Each of one end of the transmitting-receiving combiner and one end of a first group of filters composed of at least one receiving filter and at least one transmitting filter is connected to the first common interface ANT. Each of another end of the transmitting-receiving combiner and one end of a second group of filters composed of at least one receiving filter and at least one transmitting filter is connected to the second common interface ANT. Each of the first common interface ANT and the second common interface ANT is connected to a respective external interface unit. The receiving filter in each of the first group of filters and the second group of filters is connected to a radio remote unit, RRU, through a respective input port RX. The transmitting filter in each of the first group of filters and the second group of filters is connected to the RRU through a respective output port TX. According to the embodiments of the present invention, the problems in the related technology that the diplex filter and the system networking architecture based on the duplex filter are complex and the number of cables is excessive are solved.

## Claims

1. A duplex filtering device (200), comprising at least one filtering unit, **characterized in that** the filtering unit comprises: receiving filters (211), transmitting filters (212), a transmitting-receiving combiner (213) and common interfaces (ANT 214), the common interfaces (ANT 214) comprise a first common interface (ANT 214-1) and a second common interface (ANT 214-2), wherein the transmitting-receiving combiner (213) is a filter, and wherein:
each of one end of the transmitting-receiving combiner (213) and one end of a first group of filters comprised of at least one of the receiving filters (211) and at least one of the transmitting filters (212) is connected to the first common interface (ANT 214-1);
each of another end of the transmitting-receiving combiner (213) and one end of a second group of filters comprised of at least one of the receiving filters (211) and at least one of the transmitting filters (212) is connected to the second common interface (ANT 214-2), wherein each of the first common interface (ANT 214-1) and the second common interface (ANT 214-2) is connected to a respective external interface unit;
the receiving filter (211) in the first group of filters is connected to a Radio Remote Unit, RRU, through a first input port (RX) and the receiving filter (211) in the second group of filters is connected to the RRU through a second input port (RX); and
the transmitting filter (212) in the first group of filters is connected to the RRU through a first output port (TX), and the transmitting filter (212) in the second group of filters is connected to the RRU through a second output port (TX).

2. The duplex filtering device according to claim 1, wherein the first group of filters comprises a first receiving filter (211) and a first transmitting filter (212), the second group of filters comprises a second receiving filter (211) and a second transmitting filter (212), wherein
an ANT common end of each of the first transmitting filter (212), the transmitting-receiving combiner (213), and the first receiving filter (211) is connected to the first common interface (ANT 214-1);
the first receiving filter (211) is connected to the RRU through the first input port (RX) and the first transmitting filter (212) is connected to the RRU through the first output port (TX);
each of another ANT common end of the transmitting-receiving combiner (213), an ANT common end of the second receiving filter (211) and an ANT common end of the second transmitting filter (212) is connected to the second common interface (ANT 214-2); and
the second receiving filter (211) is connected to the RRU through the second input port (RX) and the second transmitting filter (212) is connected to the RRU through the second output port (TX).

3. The duplex filtering device according to claim 2, wherein
a passing frequency band of each of the first receiving filter (211) and the second receiving filter (211) is a first frequency band, a passing frequency band of each of the first transmitting filter (212) and the second transmitting filter (212) is a second frequency band, wherein the first frequency band and the second frequency band are different from each other;
a passing frequency band of the transmitting-receiving combiner (213) is a third frequency band, wherein the third frequency band is different from the first frequency band and the second frequency band.

4. The duplex filtering device according to any of claims 1 to 3, wherein the duplex filtering device comprises N filtering units,
wherein each of the receiving filters (211) in each of the filtering units is connected to the RRU through a respective input port (RX), and each of the transmitting filters (212) in each of the filtering units is connected to the RRU through a respective output port (TX), where N is an integer greater than 1.

5. A Radio Remote Unit, RRU, system (300), comprising:
an RRU (310); and **characterized in that** it further comprises:
the duplex filtering device (200) according to any one of claims 1 to 4;
wherein the duplex filtering device (200) is connected to the RRU (310) through the input ports (RX) and the output ports (TX).

6. The RRU system (300) according to claim 5, wherein when the duplex filtering device (200) comprises N filtering units, the duplex filtering device (200) is connected to the RRU (310) through the input ports (RX) of the receiving filters and the output ports (TX) of the transmitting filters in each of the filtering units.

7. A radio frequency, RF, system, comprising: an antenna unit (400) and **characterized in that** it further comprises at least two Radio Remote Unit, RRU, systems (300) according to claim 5 or claim 6,
wherein one or more of common interfaces (ANT) of each of the RRU systems are connected to one or more of ports of the antenna unit by means of RF cable connection.

8. The RF system according to claim 7, when the RRU systems (300) comprise a first RRU system and a second RRU system, and the antenna unit (400) is a 2-port antenna unit and a number of the common interfaces (ANT) is 4,
a first antenna port (1) in the 4-port antenna unit (400) is connected to a first common interface (ANT 1) in the first RRU system by means of RF cable connection;
a second common interface (ANT 2) in the first RRU system is connected to a first common interface (ANT 1) in the second RRU system by means of RF cable connection; and
a second common interface (ANT 2) in the second RRU system is connected to a second antenna port (2) in the N-port antenna unit by means of RF cable connection.

9. The RF system according to claim 7, when the RRU systems (300) comprise a first RRU system and a second RRU system, and the antenna unit (400) has N ports and a number of the common interfaces (ANT) is 2N,
a first antenna port (1) in the N-port antenna unit (400) is connected to a first common interface (ANT 1) in the first RRU system by means of RF cable connection;
a second common interface (ANT 2) in the first RRU system is connected to a (2N-1)^{th} common interface (ANT 2n-1) in the second RRU system by means of RF cable connection;
a (2N-1)^{th} common interface (ANT 2n-1) in the first RRU system is connected to a second common interface (ANT 2) in the second RRU system by means of RF cable connection;
a (2N)^{th} common interface (ANT 2n) in the first RRU system is connected to one (2) of the antenna ports in the N-port antenna unit by means of RF cable connection, a first common interface (ANT 1) in the second RRU system is connected to another one (N-1) of the antenna ports in the N-port antenna unit by means of RF cable connection, and a (2N)^{th} common interface (ANT 2n) in the second RRU system is connected to yet another one (N) of the antenna ports in the N-port antenna unit by means of RF cable connection;
where N is a natural number greater than or equal to 2.

10. The RF system according to claim 8 or 9, wherein each of the RRU systems comprises:
an RRU (310); and
the duplex filtering device (200) according to any one of claims 1 to 4;
wherein the duplex filtering device (200) comprises one filtering unit, the RRU (310) is connected to the input port (RX) of the first receiving filter (211), the input port (RX) of the second receiving filter (211), the output port (TX) of the first transmitting filter (212) and the output port (TX) of the second transmit filter (212) in the duplex filtering device (200).

11. The RF system according to claim 8 or 9, wherein each of the RRU systems comprises:
an RRU (310); and
the duplex filtering device (200) according to any one of claims 1 to 4;
wherein the duplex filtering device (200) comprises multiple filtering units, the RRU (310) is connected to the input port (RX) of the first receiving filter (211), the input port (RX) of the second receiving filter (211), the output port (TX) of the first transmitting filter (212) and the output port (TX) of the second transmit filter (212) in each of the duplex filtering devices (200).

12. The RF system according to claim 11, wherein
a passing frequency band of each of the first receiving filter (211) and the second receiving filter (211) is a first frequency band, a passing frequency band of each of the first transmitting filter (212) and the second transmitting filter (212) is a second frequency band, wherein the first frequency band and the second frequency band are different from each other;
a passing frequency band of the transmitting-receiving combiner (213) is a third frequency band, wherein the third frequency band is different from the first frequency band and the second frequency band.

## Patentansprüche

1. Duplex-Filtereinrichtung (200), umfassend zumindest eine Filtereinheit, **dadurch gekennzeichnet, dass** die Filtereinheit umfasst: Empfangsfilter (211), Sendefilter (212), einen Sender-Empfänger-Kombinator (213) und gemeinsame Schnittstellen (ANT 214), wobei die gemeinsamen Schnittstellen (ANT 214) eine erste gemeinsame Schnittstelle (ANT 214-1) und eine zweite gemeinsame Schnittstelle (ANT 214-2) umfasst, wobei der Sender-Empfänger-Kombinator (213) ein Filter ist, und wobei
ein Ende des Sender-Empfänger-Kombinators (213) und ein Ende einer ersten Filtergruppe, die aus zumindest einem der Empfangsfilter (211) und zumindest einem der Sendefilter (212) gebildet ist, jeweils mit der ersten gemeinsamen Schnittstelle (ANT 214-1) verbunden sind;
ein anderes Ende des Sender-Empfänger-Kombinators (213) und ein Ende einer zweiten Filtergruppe, die aus zumindest einem der Empfangsfilter (211) und zumindest einem der Sendefilter (212) gebildet ist, jeweils mit der zweiten gemeinsamen Schnittstelle (ANT 214-2) verbunden sind, wobei die erste gemeinsame Schnittstelle (ANT 214-1) und die zweite gemeinsame Schnittstelle (ANT 214-2) jeweils mit einer jeweiligen externen Schnittstelleneinheit verbunden sind;
der Empfangsfilter (211) aus der ersten Filtergruppe durch einen ersten Eingangsport (RX) mit einer Funkferneinheit, RRU, verbunden ist und der Empfangsfilter (211) aus der zweiten Filtergruppe durch einen zweiten Eingangsport (RX) mit der RRU verbunden ist; und
der Sendefilter (212) aus der ersten Filtergruppe durch einen ersten Ausgangsport (TX) mit der RRU verbunden ist und der Sendefilter (212) aus der zweiten Filtergruppe durch einen zweiten Ausgangsport (TX) mit der RRU verbunden ist.

2. Duplex-Filtereinrichtung nach Anspruch 1, wobei die erste Filtergruppe einen ersten Empfangsfilter (211) und einen ersten Sendefilter (212) umfasst und die zweite Filtergruppe einen zweiten Empfangsfilter (211) und einen zweiten Sendefilter (212) umfasst, wobei
ein gemeinsames ANT-Ende des ersten Sendefilters (212), ein gemeinsames ANT-Ende des Sender-Empfänger-Kombinators (213), und ein gemeinsames ANT-Ende des ersten Empfangsfilters (211) mit der ersten gemeinsamen Schnittstelle (ANT 214-1) verbunden sind;
der erste Empfangsfilter (211) durch den ersten Eingangsport (RX) mit der RRU verbunden ist und der erste Sendefilter (212) durch den ersten Ausgangsport (TX) mit der RRU verbunden ist;
ein anderes gemeinsames ANT-Ende des Sender-Empfänger-Kombinators (213), ein gemeinsames ANT-Ende des zweiten Empfangsfilters (211), und ein gemeinsames ANT-Ende des zweiten Sendefilters (212) mit der zweiten gemeinsamen Schnittstelle (ANT 214-2) verbunden sind; und
der zweite Empfangsfilter (211) durch den zweiten Eingangsport (RX) mit der RRU verbunden ist und der zweite Sendefilter (212) durch den zweiten Ausgangsport (TX) mit der RRU verbunden ist.

3. Duplex-Filtereinrichtung nach Anspruch 2, wobei
es sich bei einem Durchlassfrequenzband des ersten Empfangsfilters (211) bzw. des zweiten Empfangsfilters (211) um ein erstes Frequenzband und beim Durchlassfrequenzband des ersten Sendefilters (212) bzw. des zweiten Sendefilters (212) um ein zweites Frequenzband handelt, wobei das erste Frequenzband und das zweite Frequenzband voneinander unterschiedlich sind; und
es sich bei einem Durchlassfrequenzband des Sender-Empfänger-Kombinators (213) um ein drittes Frequenzband handelt, wobei das dritte Frequenzband von dem ersten Frequenzband und dem zweiten Frequenzband unterschiedlich ist.

4. Duplex-Filtereinrichtung nach einem der Ansprüche 1 bis 3, wobei die Duplex-Filtereinrichtung N Filtereinheiten umfasst,
wobei jeder der Empfangsfilter (211) in jeder der Filtereinheiten durch einen jeweiligen Eingangsport (RX) mit der RRU verbunden ist, und jeder der Sendefilter (212) in jeder der Filtereinheiten durch einen jeweiligen Ausgangsport (TX) mit der RRU verbunden ist, wobei N eine Ganzzahl größer als 1 ist.

5. System (300) mit Funkferneinheit, RRU, umfassend:
eine RRU (310), **dadurch gekennzeichnet, dass** es weiterhin umfasst:
die Duplex-Filtereinrichtung (200) nach einem der Ansprüche 1 bis 4;
wobei die Duplex-Filtereinrichtung (200) durch die Eingangsports (RX) und die Ausgangsports (TX) mit der RRU (310) verbunden ist.

6. System (300) mit RRU nach Anspruch 5, wobei im Fall, in dem die Duplex-Filtereinrichtung (200) N Filtereinheiten umfasst, die Duplex-Filtereinrichtung (200) durch die Eingangsports (RX) der Empfangsfilter und die Ausgangsports (TX) der Sendefilter in jeder der Filtereinheiten mit der RRU (310) verbunden ist.

7. Radiofrequenzsystem, RF-System, umfassend eine Antenneneinheit (400), **dadurch gekennzeichnet, dass** es weiterhin zumindest zwei Systeme (300) mit Funkferneinheit, RRU, nach Anspruch 5 oder 6 umfasst,
wobei eine oder mehrere der gemeinsamen Schnittstellen (ANT) jedes der Systeme mit RRU mittels RF-Kabelverbindung mit einem oder mehreren Ports der Antenneneinheit verbunden ist oder sind.

8. RF-System nach Anspruch 7, im Fall, in dem das System (300) mit RRU ein erstes System mit RRU und ein zweites System mit RRU umfasst und die Antenneneinheit (400) ein Antenneneinheit mit 2 Ports ist und die Anzahl der gemeinsamen Schnittstellen (ANT) 4 beträgt,
ein erster Antennenport (1) in der Antenneneinheit (400) mit 4 Ports mittels RF-Kabelverbindung mit einer ersten gemeinsamen Schnittstelle (ANT 1) in dem ersten System mit RRU verbunden ist;
eine zweite gemeinsame Schnittstelle (ANT 2) in dem ersten System mit RRU mittels RF-Kabelverbindung mit einer ersten gemeinsamen Schnittstelle (ANT 1) in dem zweiten System mit RRU verbunden ist; und
eine zweite gemeinsame Schnittstelle (ANT 2) in dem zweiten System mit RRU mittels RF-Kabelverbindung mit einer zweiten gemeinsamen Schnittstelle (2) in der Antenneneinheit mit N Ports verbunden ist.

9. RF-System nach Anspruch 7, im Fall, in dem die Systeme (300) mit RRU ein erstes System mit RRU und ein zweites System mit RRU umfassen und die Antenneneinheit (400) N Ports aufweist und die Anzahl der gemeinsamen Schnittstellen (ANT) 2N beträgt,
ein erster Antennenport (1) in der Antenneneinheit (400) mit N Ports mittels RF-Kabelverbindung mit einer ersten gemeinsamen Schnittstelle (ANT 1) in dem ersten System mit RRU verbunden ist;
eine zweite gemeinsame Schnittstelle (ANT 2) in dem ersten System mit RRU mittels RF-Kabelverbindung mit einer (2N-1)ten gemeinsamen Schnittstelle (ANT 2n-1) in dem zweiten System mit RRU verbunden ist;
eine (2N-1)te gemeinsame Schnittstelle (ANT 2n-1) in dem ersten System mit RRU mittels RF-Kabelverbindung mit einer zweiten gemeinsamen Schnittstelle (ANT 2) in dem zweiten System mit RRU verbunden ist;
eine (2N)te gemeinsame Schnittstelle (ANT 2n) in dem ersten System mit RRU mittels RF-Kabelverbindung mit einem (2) der Antennenports in der Antenneneinheit mit N Ports verbunden ist, eine erste gemeinsame Schnittstelle (ANT 1) in dem zweiten System mit RRU mittels RF-Kabelverbindung mit einem anderen (N-1) der Antennenports in der Antenneneinheit mit N Ports verbunden ist, und eine (2N)te gemeinsame Schnittstelle (ANT 2n) in dem zweiten System mit RRU mittels RF-Kabelverbindung mit einem weiteren (N) der Antennenports in der Antenneneinheit mit N Ports verbunden ist;
wobei N eine natürliche Zahl größer als oder gleich 2 ist.

10. RF-System nach Anspruch 8 oder 9, wobei jedes der Systeme mit RRU umfasst:
eine RRU (310); und
die Duplex-Filtereinrichtung (200) nach einem der Ansprüche 1 bis 4;
wobei die Duplex-Filtereinrichtung (200) eine Filtereinheit umfasst, die RRU (310) mit dem Eingangsport (RX) des ersten Empfangsfilters (211), dem Eingangsport (RX) des zweiten Empfangsfilters (211), dem Ausgangsport (TX) des ersten Sendefilters (212), und dem Ausgangsport (TX) des zweiten Sendefilters (212) in der Duplex-Filtereinrichtung (200) verbunden ist.

11. RF-System nach Anspruch 8 oder 9, wobei jedes der Systeme mit RRU umfasst:
eine RRU (310); und
die Duplex-Filtereinrichtung (200) nach einem der Ansprüche 1 bis 4;
wobei die Duplex-Filtereinrichtung (200) mehrere Filtereinheiten umfasst, die RRU (310) mit dem Eingangsport (RX) des ersten Empfangsfilters (211), dem Eingangsport (RX) des zweiten Empfangsfilters (211), dem Ausgangsport (TX) des ersten Sendefilters (212), und dem Ausgangsport (TX) des zweiten Sendefilters (212) in jeder der Duplex-Filtereinrichtungen (200) verbunden ist.

12. RF-System nach Anspruch 11, wobei
es sich bei einem Durchlassfrequenzband des ersten Empfangsfilters (211) bzw. des zweiten Empfangsfilters (211) um ein erstes Frequenzband und beim Durchlassfrequenzband des ersten Sendefilters (212) bzw. des zweiten Sendefilters (212) um ein zweites Frequenzband handelt, wobei das erste Frequenzband und das zweite Frequenzband voneinander unterschiedlich sind; und
es sich bei einem Durchlassfrequenzband des Sender-Empfänger-Kombinators (213) um ein drittes Frequenzband handelt, wobei das dritte Frequenzband von dem ersten Frequenzband und dem zweiten Frequenzband unterschiedlich ist.

## Revendications

1. Dispositif de filtrage duplex (200), comprenant au moins une unité de filtrage, **caractérisé en ce que** l'unité de filtrage comprend : des filtres de réception (211), des filtres d'émission (212), un combineur d'émission-réception (213) et des interfaces communes (ANT 214), les interfaces communes (ANT 214) comprenant une première interface commune (ANT 214-1) et une deuxième interface commune (ANT 214-2) et le combineur d'émission-réception (213) étant un filtre, dans lequel :
chacun d'une extrémité du combineur d'émission-réception (213) et d'une extrémité d'un premier groupe de filtres composé d'au moins un des filtres de réception (211) et d'au moins un des filtres d'émission (212) est connectée au premier interface commune (ANT 214-1);
chacun d'une autre extrémité du combineur d'émission-réception (213) et d'une extrémité d'un deuxième groupe de filtres composé d'au moins un des filtres de réception (211) et d'au moins un des filtres d'émission (212) est connectée au deuxième interface commune (ANT 214-2), dans lequel chacune de la première interface commune (ANT 214-1) et de la deuxième interface commune (ANT 214-2) est connectée à une unité d'interface extérieure respective ;
le filtre de réception (211) dans le premier groupe de filtres est connecté à une unité à distance radioélectrique, RRU via un premier port d'entrée (RX) et le filtre de réception (211) dans le deuxième groupe de filtres est connecté à la RRU via un deuxième port d'entrée (RX) ; et
le filtre d'émission (212) dans le premier groupe de filtres est connecté à la RRU via un premier port de sortie (TX), et le filtre d'émission (212) dans le deuxième groupe de filtres est connecté à la RRU via un deuxième port de sortie (TX).

2. Dispositif de filtrage duplex selon la revendication 1, dans lequel le premier groupe de filtres comprend un premier filtre de réception (211) et un premier filtre d'émission (212), et le deuxième groupe de filtres comprend un deuxième filtre de réception (211) et un deuxième filtre d'émission (212), dans lequel,
une extrémité commune ANT de chacun du premier filtre d'émission (212), du combineur d'émission-réception (213) et du premier filtre de réception (211) est connectée à la première interface commune (ANT 214-1) ;
le premier filtre de réception (211) est connecté à la RRU via le premier port d'entrée (RX) et le premier filtre d'émission (212) est connecté à la RRU via le premier port de sortie (TX) ;
chacune d'une autre extrémité commune ANT du combineur d'émission-réception (213), d'une extrémité commune ANT du deuxième filtre de réception (211) et d'une extrémité commune ANT du deuxième filtre d'émission (212) est connectée à la deuxième interface commune (ANT 214-2) ; et
le deuxième filtre de réception (211) est connecté à la RRU via le deuxième port d'entrée (RX) et le deuxième filtre d'émission (212) est connecté à la RRU via le deuxième port de sortie (TX).

3. Dispositif de filtrage duplex selon la revendication 2, dans lequel,
une bande de fréquences de passage de chacun du premier filtre de réception (211) et du deuxième filtre de réception (211) est une première bande de fréquences, et une bande de fréquences de passage de chacun du premier filtre d'émission (212) et du deuxième filtre d'émission (212) est une deuxième bande de fréquences, la première bande de fréquences et la deuxième bande de fréquences étant différentes l'une de l'autre ;
une bande de fréquences de passage du combineur d'émission-réception (213) est une troisième bande de fréquences, la troisième bande de fréquences étant différente de la première bande de fréquences et de la deuxième bande de fréquences.

4. Dispositif de filtrage duplex selon l'une quelconque des revendications 1 à 3, dans lequel le dispositif de filtrage duplex comprend en outre N unités de filtrage, dans lequel chacun des filtres de réception (211) dans chacune des unités de filtrage est connecté à la RRU via un port d'entrée respectif (RX), et chacun des filtres d'émission (212) dans chacune des unités de filtrage est connecté à la RRU via un port de sortie (TX) respectif, où N est un entier supérieur à 1.

5. Système d'unité à distance radioélectrique, RRU (300) comprenant :
une RRU (310), **caractérisé en ce qu'**il comprend en outre :
un dispositif de filtrage duplex (200) selon l'une quelconque des revendications 1 à 4 ;
dans lequel le dispositif de filtrage duplex (200) est connecté à la RRU (310) via un port d'entrée (RX) et un port de sortie (TX).

6. Système RRU (300) selon la revendication 5, dans lequel le dispositif de filtrage duplex (200) comprend N unités de filtrage, et le dispositif de filtrage duplex (200) est connecté à la RRU (310) via les ports d'entrée (RX) des filtres de réception et les ports de sortie (TX) des filtres d'émission dans chacune des unités de filtrage.

7. Système de radiofréquence RF comprenant une unité d'antenne (400), **caractérisé en ce qu'**il comprend en outre au moins deux systèmes d'unité à distance radioélectrique, RRU (300) selon la revendication 5 ou 6,
dans lequel une ou plusieurs interfaces communes (ANT) de chacun des systèmes RRU sont connectées à un ou plusieurs ports de l'unité d'antenne au moyen de connexion par câble RF.

8. Système RF selon la revendication 7, dans lequel lorsque les systèmes RRU (300) comprennent un premier système RRU et un deuxième système RRU, l'unité d'antenne (400) est une unité d'antenne à 2 ports et le nombre d'interfaces communes (ANT) est de 4,
un premier port d'antenne (1) dans l'unité d'antenne à 4 ports (400) est connecté à une première interface commune (ANT 1) dans le premier système RRU au moyen de connexion par câble RF ;
une deuxième interface commune (ANT 2) dans le premier système RRU est connectée à une première interface commune (ANT 1) dans le deuxième système RRU au moyen de connexion par câble RF; et
une deuxième interface commune (ANT 2) dans le deuxième système RRU est connectée à un deuxième port d'antenne (2) dans l'unité d'antenne à N ports au moyen de connexion par câble RF.

9. Système RF selon la revendication 7, dans lequel lorsque les systèmes RRU (300) comprennent un premier système RRU et un deuxième système RRU, l'unité d'antenne (400) est pourvue de N ports, et le nombre d'interfaces communes (ANT) est de 2N,
un premier port d'antenne (1) dans l'unité d'antenne à N ports (400) est connecté à une première interface commune (ANT 1) dans le premier système RRU au moyen de connexion par câble RF ;
une deuxième interface commune (ANT 2) dans le premier système RRU est connectée à la (2N-I)ème interface commune (ANT 2n-I) dans le deuxième système RRU au moyen de connexion par câble RF ;
une (2N-I)ème interface commune (ANT 2n-I) dans le premier système RRU est connectée à une deuxième interface commune (ANT 2) dans le deuxième système RRU au moyen de connexion par câble RF ;
une (2N)ème interface commune (ANT 2n) dans le premier système RRU est connectée à l'un (2) des ports d'antenne dans l'unité d'antenne à N ports au moyen de connexion par câble RF, une première interface commune (ANT 1) dans le deuxième système RRU est connectée à une autre (N-1) des ports d'antenne dans l'unité d'antenne à N ports au moyen de connexion par câble RF, et une (2N)ème interface commune (ANT 2n) dans le deuxième système RRU est connectée à un autre (N) des ports d'antenne dans l'unité d'antenne à N ports au moyen de connexion par câble RF ;
où N est un nombre naturel supérieur ou égal à 2.

10. Système RF selon la revendication 8 ou 9, dans lequel chacun des systèmes RRU comprend :
une RRU (310); et
un dispositif de filtrage duplex (200) selon l'une quelconque des revendications 1 à 4 ;
dans lequel le dispositif de filtrage duplex (200) comprend une unité de filtrage, et la RRU (310) est connectée au port d'entrée (RX) du premier filtre de réception (211), au port d'entrée (RX) du deuxième filtre de réception (211), au port de sortie (TX) du premier filtre d'émission (212) et au port de sortie (TX) du deuxième filtre d'émission (212) dans le dispositif de filtrage duplex (200).

11. Système RF selon la revendication 8 ou 9, dans lequel chacun des systèmes RRU comprend :
une RRU (310); et
un dispositif de filtrage duplex (200) selon l'une quelconque des revendications 1 à 4;
dans lequel le dispositif de filtrage duplex (200) comprend une pluralité d'unités de filtrage, et la RRU (310) est connectée au port d'entrée (RX) du premier filtre de réception (211), au port d'entrée (RX) du deuxième filtre de réception (211), au port de sortie (TX) du premier filtre d'émission (212) et au port de sortie (TX) du deuxième filtre d'émission (212) dans chacun des dispositifs de filtrage duplex (200).

12. Système RF selon la revendication 11, dans lequel :
une bande de fréquences de passage de chacun du premier filtre de réception (211) et du deuxième filtre de réception (211) est une première bande de fréquences et une bande de fréquences de passage de chacun du premier filtre d'émission (212) et du deuxième filtre d'émission (212) est une deuxième bande de fréquences, la première bande de fréquences et la deuxième bande de fréquences étant différentes l'une de l'autre ;
une bande de fréquences de passage du combineur d'émission-réception (213) est une troisième bande de fréquences, la troisième bande de fréquences étant différente de la première bande de fréquences et de la deuxième bande de fréquences.
